(19) Europäisches Patentamt

European Patent Office

Office européen des brevets

(11) **EP 2 841 502 B1**

(12) **EUROPEAN PATENT SPECIFICATION**

(45) Date of publication and mention
of the grant of the patent:
**12.07.2023   Bulletin 2023/28**

(21) Application number: **13879246.0**

(22) Date of filing: **20.03.2013**

(51) International Patent Classification (IPC):
***C08L 75/14*** *(2006.01)*

(52) Cooperative Patent Classification (CPC):
**C08G 18/6511; C08G 18/3206; C08G 18/4009;
C08G 18/4072; C08G 18/4825; C08G 18/4841;
C08G 18/4854; C08G 18/6216; C08G 18/633;
C08G 18/7657; C08G 81/025**

(86) International application number:
**PCT/US2013/033101**

(87) International publication number:
**WO 2014/200452 (18.12.2014 Gazette 2014/51)**

(54) **DISPERSION OF A FUNCTIONALIZED POLYOLEFIN IN A POLYOL**

DISPERSION EINES FUNKTIONALISIERTEN POLYOLEFINS IN EINEM POLYOL

DISPERSION D'UNE POLYOLÉFINE FONCTIONNALISÉE DANS UN POLYOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2012   US 201261617768 P**

(43) Date of publication of application:
**04.03.2015   Bulletin 2015/10**

(73) Proprietor: **Dow Global Technologies LLC**
**Midland, MI 48674 (US)**

(72) Inventors:
• **VIRGILI, Justin, M.**
**Midland, MI 48674 (US)**
• **ADRIAN, David, J.**
**Midland, MI 48674 (US)**
• **CLAESSENS, Sven**
**B-9160 Lokeren (BE)**
• **STRANDBURG, Gary, M.**
**Mount Pleasant, MI 48858 (US)**
• **READ, Michael, D.**
**Midland, MI 48642 (US)**
• **WENDT, Benjamin, L.**
**Midland, MI 48642 (US)**
• **SONNENSCHEIN, Mark, F.**
**Midland, MI 48640 (US)**

(74) Representative: **Beck Greener LLP**
**Fulwood House**
**12 Fulwood Place**
**London WC1V 6HR (GB)**

(56) References cited:
**WO-A1-03/029308      WO-A2-02/28937
GB-A- 2 265 626      GB-A- 2 273 294
JP-A- S 644 227      US-A- 5 358 984**

**Description**

FIELD OF THE INVENTION

The present invention relates to a stable dispersion of a functionalized polyolefin in a polyol and a process for preparing the same.

BACKGROUND OF THE INVENTION

Thermoplastic polyurethane resins (TPU) are generally produced by reacting a polyol, a diisocyanate and a glycol chain extender. The properties of these resins depend to a large extent on the relative amounts of the reactants. These resins have been blended with other thermoplastic resins to produce compositions having a variety of properties making them suitable for a host of applications. While non-polar polyethylene, or polypropylene, and polar TPU have been viewed as generally incompatible with one another, it would be desirable to have a method to make such a polymer blend composition which exhibits desirable TPU properties, such as mechanical (tensile) properties and abrasion resistance, and desirable polyolefin properties, such as low density, resistance to polar solvents, and low moisture sensitivity.

Attempts to produce a polyolefin/TPU blend by melt blending a preformed TPU with a preformed polyolefin have met with limited success. Such blends may suffer from delamination or separation when formed in to articles or films, for example see USP 6,174,959 wherein melt blending of an aliphatic isocyanate and polyester polyol TPU and polypropylene were found to be grossly incompatible and could not be molded. Attempts to improve the compatibility between the TPU and polyolefin using a compatabilizing amount of one or more modified polyolefin are disclosed in USP 4,883,837; WO 00/63293; and EP 0837097. However, for cast applications, i.e., making a film, a multistep process of melt-extruding the performed TPU polymer then dissolving the TPU, polyolefin, and modified polyolefin in an inert solvent, followed by removing the solvent are required. Other attempts have utilized modified polyolefins comprising silane moieties which promote cross-linking, see USP 6,632,879. However, the cross-linking step may be undesirably slow unless a cross-linking catalyst is used, but the use of such catalysts has been shown to reduce tensile and compression set properties.

Alternatively, copolymer polyols, which are dispersions of a polymer in a polyol, are often included as a component in making reinforced polyurethane foam. For example, styrene and acrylonitrile (SAN) copolymer polyols are well known components in making reinforced polyurethane foam. SAN copolymer polyols are dispersion polymerized, a process unfortunately requiring anywhere from about 6 to 24 hours. Furthermore, the polymerization itself requires a high level of safety measures including the need to remove unreacted residual monomer after the reaction. SAN polymer is more costly than alternative polymers such as polyethylene and polypropylene.

USP 6,512,024 discloses a process to make a stable aqueous dispersion of a resinous material in a continuous process for applications such as curable electrocoating. USP 6,613,827 discloses a process to make a urethane from a stable dispersion comprising the reaction product of a maleic anhydride functionalized low molecular weight wax reacted with a monoamine polyol. US Publication No. 2010/0048785 discloses a process to make a polyurethane using a polyol dispersion comprising a thermoplastic polymer and a polyether block copolymer wherein one block (e.g., polystyrene, polyamide, polyethylene, polyester, etc.) is compatible with the thermoplastic polymer and the polyether block that is compatible with the polyol.

Accordingly, an improved method for providing a reinforced polymer, such as a TPU, with improved properties is sought. Preferably said process utilizes a stable dispersion of a relatively low-cost polymer, such as polyethylene, in a polyol and a process for preparing such dispersions that is less capital and labor-intensive than described in prior art is desirable. Still more desirable is a process that is faster than the SAN dispersion polymerization process.

JPS644227A relates to a dispersant to enhance uniform dispersibility of fine particles into an aqueous medium by allowing a copolymer of alkylvinyl ether or the like and maleic anhydride to react with specified polyetherpolyol thereby preparing a dispersant.

US5358984 relates to dispersants that are the reaction product of polyoxyalkylene polyether polyols with polymers containing anhydride groups, that may be used in the production of polymer polyols having high styrene contents and high solids contents. The polymers containing the anhydride groups may be preformed polymers which are then reacted with the polyol, or may be formed in the polyol directly prior to esterification with the polyol to form the dispersants. Maleic anhydride and methacrylic arthydride and derivatives thereof are examples of monomers suitable for the dispersants. Polymer polyols made using these dispersants may be reacted with polyisocyanates to produce polyurethanes.

BRIEF SUMMARY OF THE INVENTION

The present invention is a dispersion of

a maleic anhydride grafted olefin (co)polymer; and
optionally, a thermoplastic (co)polymer resin,

in a polyol having a primary hydroxyl content of equal to or greater than 50 percent,

wherein the dispersion comprises reaction products between any of the maleic anhydride grafted olefin (co)polymer, the polyol and/or optionally the thermoplastic (co)polymer resin,

wherein the olefin (co)polymer is selected from a homopolymer of polyethylene or polypropylene, a random, block, or graft polyolefin copolymer comprising ethylene and one or more unsaturated monomer selected from a $C_3$ to $C_{12}$ $\alpha$, $\beta$-unsaturated alkene, a substantially linear ethylene polymer, a linear ethylene polymer, an ethylene/alpha-olefin block copolymers, or combinations thereof.

In one embodiment, the maleic anhydride is grafted onto the olefin (co)polymer in an amount of from 0.01 to 6 weight percent based on the weight of the olefin (co)polymer.

In another embodiment, the polyol is a polycarbonate polyol, a polyester polyol, a polyalkylene polyol, or a polyether polyol having a terminal unsaturation content between 0.0001 meq/g to 0.06 meq/g.

In one embodiment, the dispersion comprises one or more thermoplastic (co)polymer resin selected from LLDPE, HDPE, a low-molecular weight polyethylene, an elastomer, a polyolefin elastomer, a polyurethane elastomer, a chlorinated PE resin, a polyolefin wax, an EAA copolymer, a linear copolymer of 1-octadecene and maleic anhydride, an ethylene(meth)acrylate copolymer, an ethylene vinyl acetate copolymer, an ethylene/vinyl alcohol copolymer, a polyvinyl alcohol, SAN, or a polyurethane.

One embodiment of the present invention is a process to make the dispersion described hereinabove comprising the steps of:

(i) contacting, in a single mixer,

(a) the maleic anhydride grafted olefin (co)polymer,
(b) a polyol having a primary hydroxyl content of equal to or greater than 50 percent, and
(c) optionally the thermoplastic (co)polymer, under conditions of sufficient heat and sufficient shear to form an initial dispersion of the maleic anhydride grafted olefin (co)polymer in the polyol

and

(ii) while under shear, cooling the initial dispersion sufficiently to form a stable dispersion.

In one embodiment, the process disclosed hereinabove is a batch process.

In another embodiment, the single mixer of the process disclosed hereinabove is an extruder and the process is continuous.

One embodiment of the present invention is a polyurethane (PU), a thermoplastic elastomer (TPE) or a thermoplastic copolyester (COPE) comprising the dispersion disclosed hereinabove, preferably the thermoplastic elastomer is a thermoplastic polyurethane (TPU).

One embodiment of the present invention is a process for producing the thermoplastic polyurethane disclosed herein above comprising the step of reacting:

(1) the dispersion of Claim 1
With
(2) a prepolymer reaction product of a short chain diol with a diisocyanate.

Preferably, the polyurethane made by the process of the present invention disclosed hereinabove is used for a reactive extrusion application, cast application, a liquid cast elastomer, an adhesive, a hot melt adhesive, a solvent born adhesives, a one component (1K) adhesive (moisture cured), a two component (2K) adhesives a sealant, or an applied elastomer coating.

BRIEF DESCRIPTION OF THE DRAWINGS

**FIG. 1** is an optical micrograph of Example 11.
**FIG. 2** is a plot of storage modulus from dynamic mechanical analysis for Examples 12 to 17.
**FIG. 3** is a plot of storage modulus from dynamic mechanical analysis for Examples 12 and 18 to 21.
**FIG. 4** is a plot of creep resistance performance for Examples 12, 13, 38, and 39.
**FIG. 5** is an optical micrograph of Example 32.
**FIG. 6** is a plot of creep resistance performance for Examples 34 to 37.

DETAILED DESCRIPTION OF THE INVENTION

"Dispersion" refers to a dispersion at the molecular or ionic level (a true solution) or colloidal level (having particle sizes up to hundreds of microns in diameter).

"Stable dispersion" means stable to significant dispersed phase coalescence for at least a day, preferably at least a week, more preferably at least a month, still more preferably three months, even more preferably at least six months, most preferably at least a year.

"Stabilizer" refers to an interfacially active compound that stabilizes or facilitaes the preparation of a dispersion of a polymer in a polyol.

"Single mixer" refers to a mixing device comprising one or more mixers that operate at identical mixing rates. Examples of single mixers include a beaker or tank in combination with one or more mixing blades on a single shaft and an extruder with multiple mixing elements all of which turn at the same rate.

The polyol dispersion of the present invention comprises a maleic anhydride grafted polyolefin homopolymer or copolymer (i.e., (co)polymer). The term copolymer as used herein refers to a polymer comprising two or more monomers copolymerized together. The polyolefin may be a homopolymer, e.g., polyethylene, polypropylene, or the like or a random, block, or graft polyolefin copolymer, comprising ethylene and one or more unsaturated monomer such as a $C_3$ to $C_{12}$ $\alpha$, $\beta$-unsaturated alkene ($C_3$ to $C_{12}$ $\alpha$-olefin), preferably propylene, 1-butylene, 1-hexene, 4-methyl-1-pentene, 1-heptene, or 1-octene. Preferred polyolefins homopolymers are polyethylene homopolymers such as linear low density polyethylene (LLDPE), low density polyethylene (LDPE), high density polyethylene (HDPE), or an atactic, syndiotactic, or an isotactic polypropylene homopolymer (PP). Preferred polyolefin copolymers are polyethylene copolymers wherein the major molar portion (at least 50 percent) of the copolymer consists of ethylene units copolymerized with one of the unsaturated monomers described herein above. Preferred copolymers are ethylene-propylene (EP), ethylene-butene (EB), and ethylene-octene (EO) copolymers.

As illustrative embodiments of polyolefins in copolymer form are those derived from the copolymerization of any one of the olefin monomers set forth above but preferably ethylene in the minimum molar proportions of at least 50 percent with a vinyl functional group containing monomer such as acrylic acid, methacrylic acid, maleic acid, maleic anhydride, acrylamide, methacrylamide, glycidyl acrylate, glycidyl methacrylate, vinyl acetate, vinyl butyrate, methyl acrylate, ethyl acrylate, butyl acrylate, 2-hydroxyethyl acrylate, sodium acrylate, zinc acrylate, a blocked isocyanate, or an ionic hydrocarbon polymer from the polymerization of $\alpha$-olefins with $\alpha$, $\beta$-ethylenically unsaturated carboxylic acids as described in USP 3,264,272.

The olefin (co)polymer may be prepared by all customer methods known in the art, for example see, for instance, "Olefin Polymers", Vol. 14, Kirk Othmer Encyclopedia of Chemical Technology, pp. 217 to 335 (1967).

Alternatively, the polyolefin used in the present invention may be a substantially linear ethylene polymer or a linear ethylene polymer (S/LEP), or a mixture thereof. Preferably, polymerization of an S/LEP occurs via a solution polymerization process at a temperature of 20°C to 250°C, using constrained geometry catalyst technology. Both substantially linear ethylene polymers and linear ethylene polymers are known. Substantially linear ethylene polymers and their method of preparation are fully described in USP 5,272,236 and 5,278,272,. Linear ethylene polymers and their method of preparation are fully disclosed in USP 3,645,992; 4,937,299; 4,701,432; 4,937,301; 4,935,397; and 5,055,438; and EP 129,368; EP 260,999; and WO 90/07526. For example, such polymers are available commercially under the trade names ENGAGE™ polyolefin elastomers and AFFINITY™ polyolefin plastomers from The Dow Chemical Company, EXACT™ polyolefin elastomers from ExxonMobil, and TAFMER™ polyolefin elastomers from Mitsui.

A preferred process for making the ethylene/alpha-olefin block copolymers is disclosed in, for example, USP 7,355,089; 7,504,347; 7,514,517; 7,524,911; 7,557,147; 7,579,408; 7,582,716; 7,592,397; 7,608,668; and 7,622,179. For example, one such method comprises contacting ethylene and optionally one or more addition polymerizable monomers other than ethylene under addition polymerization conditions with a catalyst composition comprising the admixture or reaction product resulting from combining:

(A) a first olefin polymerization catalyst having a high comonomer incorporation index,
(B) a second olefin polymerization catalyst having a comonomer incorporation index less than 90 percent, preferably less than 50 percent, most preferably less than 5 percent of the comonomer incorporation index of catalyst (A), and
(C) a chain shuttling agent.

Preferred olefin block copolymers for use in the present invention are an (i) alpha-olefin copolymer, specifically an alpha-olefin block copolymer comprising one or more hard segment and one or more soft segment and characterized by one or more of the aspects described as follows:

(i.a) has a weight average molecular weight/number average molecular weight ratio ($M_w/M_n$) from 1.7 to 3.5, at least one melting point ($T_m$) in degrees Celsius (°C), and a density (d) in grams/cubic centimeter (g/cc), wherein the numerical values of Tm and d correspond to the relationship:

$$T_m > -2002.9 + 4538.5(d) - 2422.2(d)^2 \text{ or } T_m > -6553.3 + 13735(d) - 7051.7(d)^2;$$

or
(i.b) has a $M_w/M_n$ from 1.7 to 3.5, and is characterized by a heat of fusion (ΔH) in Joules per gram (J/g) and a delta quantity, ΔT, in degrees Celsius defined as the temperature difference between the tallest differential scanning calorimetry (DSC) peak and the tallest crystallization analysis fractionation (CRYSTAF) peak, wherein the numerical values of ΔT and ΔH have the following relationships:

ΔT > -0. 1299(ΔH) + 62.81 for ΔH greater than zero and up to 130 J/g,
ΔT ≥ 48°C for ΔH greater than 130 J/g,
wherein the CRYSTAF peak is determined using at least 5 percent of the cumulative polymer, and if less than 5 percent of the polymer has an identifiable CRYSTAF peak, then the CRYSTAF temperature is 30°C; or

(i.c) is characterized by an elastic recovery (Re) in percent at 300 percent strain and 1 cycle measured with a compression-molded film of the ethylene/alpha-olefin interpolymer, and has a density (d) in grams/cubic centimeter (g/cc), wherein the numerical values of Re and d satisfy the following relationship when ethylene/alpha-olefin interpolymer is substantially free of a cross-linked phase:

$$Re > 1481-1629(d);$$

or
(i.d) has a molecular fraction which elutes between 40°C and 130°C when fractionated using TREF, characterized in that the fraction has a molar comonomer content greater than, or equal to, the quantity (- 0.2013) T + 20.07, more preferably greater than or equal to the quantity (-0.2013) T+ 21.07, where T is the numerical value of the peak elution temperature of the TREF fraction, measured in °C; or
(i.e) has a storage modulus at 25 °C (G'(25 °C)) and a storage modulus at 100°C (G'(100 °C)) wherein the ratio of G'(25 °C) to G'(100 °C) is in the range of 1:1 to 9: 1 or
(i.f) has a molecular fraction which elutes between 40°C and 130°C when fractionated using TREF, characterized in that the fraction has a block index of at least 0.5 and up to 1 and a molecular weight distribution, $M_w/M_n$, greater than 1.3; or
(i.g) has an average block index greater than zero and up to 1.0 and a molecular weight distribution, $M_w/M_n$, greater than 1.3.

Test methods used to characterize such olefin block copolymers are discussed in further detail in USP 7,355,089 and USP Publication No. 2006/0199930. Standard crystallization analysis fractionation, or CRYSTAF, is used to determine branching distributions. CRYSTAF is determined using a CRYSTAF 200 unit commercially available from Polymer-Char, Valencia, Spain. The samples are dissolved in 1,2,4 trichlorobenzene at 160°C (0.66 mg/mL) for 1 hr and stabilized at 95°C for 45 minutes. The sampling temperatures range from 95 to 30°C at a cooling rate of 0.2°C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.
The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70°C and with smoothing parameters above the temperature limit of 0.1, and below the temperature limit of 0.3.
Analytical temperature rising elution fractionation analysis (TREF) is conducted according to the method described in USP 4,798,081 and Wilde, L.; Ryle, T.R.; Knobeloch, D.C.; Peat, I.R.; Determination of Branching Distributions in Polyethylene and Ethylene Copolymers, J. Polym. Sci., 20, 441-455 (1982).

The maleic anhydride, as well as other unsaturated heteroatom containing species, may be grafted to the polymer by any conventional method, typically in the presence of a free radical initiator, for example the peroxide and azo classes of compounds, etc., or by ionizing radiation. Organic initiators are preferred, such as any one of the peroxide initiators, such as, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(tert-butyl peroxy)hexane, 2,5-dimethyl-2,5-di(tert-butyl peroxy)-3-hexyne, lauryl peroxide, and tert-butyl peracetate. A suitable azo compound is 2,2'-azobis(isobutyronitrile). The organic initiators have varying reactivities at different temperatures, and may generate different types of free radicals for grafting. One skilled in the art may select the appropriate organic initiator as needed for the grafting conditions.

The grafting reaction may be performed in the melt, in solution, in the solid-state, and in a swollen-state. The maleation may be performed in a wide-variety of equipment, such as, but not limited to, twin screw extruders, single screw extruders, Brabenders, and batch reactors.

The grafted maleic anhydride grafted olefin (co)polymer may or may not contain small amounts of hydrolysis product and/or other derivatives. Preferably, the maleic anhydride grafted olefin (co)polymer has a weight average molecular weight equal to or greater than 250 daltons, preferably a weight average molecular weight equal to or greater than 500 daltons, and more preferably a weight average molecular weight equal to or greater than 1,000 daltons. Preferably, the maleic anhydride grafted olefin (co)polymer has a weight average molecular weight equal to or less than 250,000 daltons, preferably a weight average molecular weight equal to or less than 100,000 daltons, and more preferably a weight average molecular weight equal to or less than 25,000 daltons. The weight average molecular weight ($M_w$) is measured by gel permeation chromatography (GPC).

Preferably, the amount of maleic anhydride constituent grafted on the polyolefin chain is equal to or greater than 0.01 weight percent (based on the weight of the olefin (co)polymer), more preferably equal to or greater than 0.1 weight percent, and even more preferably equal to or greater than 0.8 weight percent. Preferably, the amount of maleic anhydride constituent grafted on the polyolefin chain is equal to or less than 6 weight percent (based on the weight of the olefin (co)polymer), more preferably equal to or less than 3 weight percent, even more preferably equal to or less than 2 weight percent, and even more preferably equal to or less than 1.2 weight percent. In a preferred embodiment, 0.8 weight percent to 1.2 weight percent of maleic anhydride is grafted. All individual values and subranges between 0.01 and 6 weight percent are considered within the scope of this invention, and are disclosed herein. The level of maleic anhydride as determined by titration analysis, FTIR analysis, or any other appropriate method.

The maleic anhydride grafted olefin (co)polymer is present in the polyol dispersion of the present invention in an amount of equal to or greater than 2 weight percent, more preferably equal to or greater than 5 weight percent, still more preferably equal to or greater than 10 weight percent, wherein weight percent is based on the total weight of the polyol dispersion. The maleic anhydride grafted olefin (co)polymer is present in the polyol dispersion of the present invention in an amount of equal to or less than 80 weight percent, more preferably equal to or less than 60 weight percent, still more preferably equal to or less than 50 weight percent, wherein weight percent is based on the total weight of the polyol dispersion

Additional embodiments of the invention provide for olefin (co)polymers grafted with other carbonyl-containing compounds. In one embodiment, these grafted olefin (co)polymers may have weight average molecular weights the same as, or similar to, those described above for the grafted maleic anhydride olefin (co)polymers. In another embodiment, these grafted olefin (co)polymers are prepared using the same or similar amounts of grafting compound and initiator as those used for the grafted maleic anhydride olefin (co)polymers, as described above. In another embodiment, these grafted olefin (co)polymers contain the same or similar levels of grafted compound as for the grafted maleic anhydride, as described above.

Additional carbonyl-containing compounds include, but are not limited to, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, esters thereof, imides thereof, salts thereof, and Diels-Alder adducts thereof.

Polyols suitable for use in the present invention are polycarbonate polyols, polyester polyols, polyalkylene polyols, preferably, polyether polyols. The polyol used in the present invention preferably has a functionality (reactive hydrogens per molecule) of 1 to 30, preferably, preferably 1 to 8. More preferably 2 to 8, more preferably 2 to 4, and hydroxyl numbers of 225 to 5.61, preferably of 75 to 14. Desirably, the polyol has a low level of unsaturation. Unsaturation is a measure of allyl- or propenyl-type unsaturation in a polyol, resulting from propylene oxide isomerization to eliminate an alcohol functional group during polyol manufacture, potentially forming undesirable monofunctional alcohol (monol) chains. Preferably, the polyol of the present invention has a low level of unsaturation, for example equal to or less than 0.03 milliequivalents per gram (meq/g), preferably less than 0.02 meq/g, more preferably less than 0.015 meq/g of polyol. Polyols for use in the present invention can have unsaturation values of equal to or greater than 0.0001 meq/g, preferably equal to or greater than 0.0005 meq/g. Unsaturation may be determined according to American Society for Testing and Materials (ASTM) method D-4671.

Preferred polyols for use in the present invention have a high primary hydroxyl content, preferably the primary hydroxyl content is equal to or greater than 50 percent, more preferably equal to or greater than 60 percent, more preferably equal to or greater than 75 percent, and most preferably equal to or greater than 80 percent, percent based on the total number of primary and secondary hydroxyls in the polyol.

Suitable polyols for use in the present invention have a mean molecular weight of from equal to or greater than 300 g/mol, more preferably of from equal to or greater than 400 g/mol, and even more preferably of from 600 g/mol. Suitable polyols have a mean molecular weight of from equal to or less than 8,000 g/mol, more preferably of from equal to or less than 5,000 g/mol, and even more preferably of from equal to or less than 4,000 g/mol. The mean molecular weight can, for example, be determined by means of gel permeation chromatography (GPC). Suitable methods are known in principle to those skilled in the art. As standards for the GPC measurements, it is possible to use, for example, polystyrene or, particularly for the measurement of esters, polymethyl methacrylate.

Polyols may be prepared by reacting one or more alkylene oxides having 2 to 4 carbon atoms in the alkylene radical and an initiator molecule containing 2 to 8, preferably 2 to 4, active hydrogen atoms. Well-established manufacturing processes, such as anionic or cationic polymerization, are suitable for preparing these polyols. Suitable anionic polymerization processes may use alkali hydroxides such as sodium, potassium or cesium hydroxide, or alkali alcoholates such as sodium, potassium or cesium methylate, -ethylate or -isopropoxylate as catalyst(s). Suitable cationic polymerization processes may use Lewis acids such as antimony pentachloride, boronfluoride-etherate or transition metal catalysts, such as cobalt, zinc or blends thereof. Double metal cyanide (DMC) catalysts are particularly useful for the preparation of polyols. Examples of some DMC catalysts and their preparation may be found in USP 3,427,334; 3,941,849; 4,477,589; 5,158,922; 5,470,813; 5,482,908; and 7,348,460.Suitable alkylene oxides for the preparation of polyether polyols include tetrahydrofuran, ethylene oxide, 1,3-propylene oxide, 1,2- or 2,3-butylene oxide, styrene oxide and epichlorohydrin. Ethylene oxide and propylene oxide are preferred. The alkylene oxides may be used individually, alternating in sequence, or as mixtures. Possible initiator molecules include water, organic dicarboxylic acids, aliphatic and aromatic N-mono, N, N-, N, N'-dialkyl substituted diamines having 1 to 4 carbons in the alkyl radical, and mono-alkyl tertiary amines. Other initiator molecules include alkanolamines such as ethanolamine, diethanol amines N-methyl- and N-ethylene ethanolamines, diethanolamines, triethanolamine ammonia, hydrazine and hydrazide. Preferably used are multifunctional, particularly bi- and trifunctional alcohols such as ethylene glycol, propylene glycol, trimethylene glycol, diethylene glycol, dipropylene glycol, 1, 4-butane glycol, 1,6-hexamethylene glycol, glycerine, trimethylol propane, pentaerythritol, sorbitol and sucrose.

Preferred polyols may be used individually or in the form of mixtures and include polyether polyols, especially alkoxylation products comprised of ethylene oxide, propylene oxide, or butylene oxide homopolymers, random copolymers, or block copolymers, such as VORANOL™ brand polyols available from The Dow Chemical Company, and PTMEG (polytetramethylene ether glycol) polyols. Polyester polyols, including those comprising caprolactone and adipates, polycarbonate polyols, or polyalkylene polyols (hydrogenated or unhydrogenated) are also preferred polyols for the invention. Random or block copolymer polyols of any of the aforementioned polyols, such as PTMEG-polycaprolactone copolymer polyols (available from Perstorp) or copolymers of polyester adipate and polycarbonate polyols are also preferred polyols for the invention.

The polyol is present in the polyol dispersion of the present invention in an amount of equal to or greater than 20 weight percent, more preferably equal to or greater than 40 weight percent, still more preferably equal to or greater than 50 weight percent, wherein weight percent is based on the total weight of the polyol dispersion. The polyol is present in the polyol dispersion of the present invention in an amount of equal to or less than 98 weight percent, more preferably equal to or less than 95 weight percent, still more preferably equal to or less than 90 weight percent, wherein weight percent is based on the total weight of the polyol dispersion.

Suitable thermoplastic (co)polymer resins for use in the present invention include polyethylene (PE) polymers including PE homopolymers, PE copolymers, graft-modified PE homo- and copolymers, polypropylene (PP) polymers and copolymers, polystyrene (PS) polymers and copolymers, elastomers, polyolefin waxes, and thermoplastic polyurethane resins are further examples of suitable preformed polymer resins, preformed polymer as used herein refers to the polymerized reaction product of monomers to form a polymer.

Specific examples of preferred thermoplastic (co)polymer resins include linear low-density polyethylene (LLDPE) resins such as DOWLEX™ LLDPE resins available from The Dow Chemical Company; high-density polyethylene (HDPE) resins such as DOWLEX HDPE resins and UNIVAL™ DMDA HDPE resins both available from The Dow Chemical Company; low-molecular weight polyethylenes; elastomers such as polybutadiene, polyisoprene, polyisobutylene, ENGAGE™ polyolefin elastomers, AFFINITY™ polyolefin elastomers both available from The Dow Chemical Company, PELLETHANE™ polyurethane elastomer available from Lubrizol, and TYRIN™ chlorinated PE resin available from The Dow Chemical Company; polyolefin waxes such as EPOLENE™ polyolefin wax available from Eastman Kodak Company; ethylene acrylic acid (EAA) copolymers such as PRIMACOR™ resins available from The Dow Chemical Company;

ethylene(meth)acrylate copolymers such as ethylene/methacrylate copolymers, ethylene/methylacrylate/glycidyl methacrylate copolymers, ethylene/butyl acrylate copolymers; ethylene vinyl acetate copolymers; ethylene/vinyl alcohol copolymers; polyvinyl alcohol; SAN polymers such as TYRIL™ resins available from The Dow Chemical Company; and ISOPLAST™ polyurethane engineering resin available from Lubrizol; maleated styrenic block copolymers such as poly(styrene-block-ethylene-*co-butylene-block-styrene*) (SEBS), poly(styrene-block-isoprene-block-styrene) (SIS), and poly(styrene-block-butadiene-block-styrene) (SBS) copolymers, acrylonitrile, butadiene, and styrene terpolymer (ABS), and ethylene propylene diene monomer rubber (EPDM).

If present in the polyol dispersion of the present invention, the thermoplastic (co)polymer resin is present in an amount of equal to or greater than 0.5 weight percent, more preferably equal to or greater than 2 weight percent, and more preferably equal to or greater than 3 weight percent, wherein weight percent is based on the total weight of the polyol dispersion. If present in the polyol dispersion of the present invention, the thermoplastic (co)polymer resin is present in an amount of equal to or less than 50 weight percent, more preferably equal to or less than 45 weight percent, still more preferably equal to or less than 40 weight percent, wherein weight percent is based on the total weight of the polyol dispersion.

When combined together, the components of the polyol dispersion of the present invention, specifically the maleic anhydride grafted olefin (co)polymer, polyol, and optional thermoplastic (co)polymer, may react together to form reaction products therefrom, such as, but not limited to, an ester of the olefin (co)polymer and polyol comprising a carboxylic acid group formed from the reaction between a polyol hydroxyl end group and a maleic anhydride group. In addition to the maleic anhydride grafted olefin (co)polymer, polyol, and optional thermoplastic (co)polymer, the polyol dispersion of the present invention compromises any reaction product between the maleic anhydride grafted olefin (co)polymer and/or polyol and/or optional thermoplastic (co)polymer.

The reaction between the maleic anhydride grafted olefin (co)polymer , polyol, and optional thermoplastic (co)polymer may proceed with or without the presence of an esterification catalyst such asp-toluene sulfonic acid.

Imide- and amide-based reaction products produced from the reaction of an amine-terminated polyol (for example JEFF AMINE™ amine-terminated polyols) and a MAH grafted olefin.

Alternatively, the reaction may occur between a blocked isocyanate grafted olefin (co)polymer; polyol, and optional thermoplastic (co)polymer such as the reaction product of $\alpha$, $\alpha$'-dimethyl meta-isopropenyl benzyl isocyanate and styrene, which is subsequently blocked with an alcohol.

The present invention also provides for a process to make the polyol dispersions according to the present invention. The process may be batch, continuous, or a combination of batch and continuous, for example seen USP 6,613,827 and 6,512,024 and US Patent Application No. 2010/0048785. Preferably, the polyol dispersions of the present invention are made in a single mixer, examples of suitable sources of shear in a batch process include mixing blades such as a Cowles-type blade, high shear stator-rotor dispersers, and ultrasonic mixers. Preferably, the process is a continuous process wherein the mixer is an extruder. Typically, in the continuous process, the polyol addition occurs downstream of the maleic anhydride grafted olefin (co)polymer and thermoplastic resin (if used), preferably after the maleic anhydride grafted olefin (co)polymer and thermoplastic resin (if used) is heated and melted. Preferably the polyol addition coincides with elements designed to incorporate low viscosity fluids, such as gear mixer elements, in the extruder.

Typically, the extruder comprises a single or twin-screw configuration with any number and types of mixing elements and addition ports. A skilled artisan can determine any number of different configurations that would provide sufficient mixing for a system of interest without undue experimentation. Typically, the extruder comprises a zone of forward elements, or a combination of forward and reverse elements, where preformed polymer resin addition and heating occurs. Preferably, the extruder comprises a twin screw configuration with 2 or more zones containing gear mixers wherein stabilizer and polyol addition occurs. More preferably, the extruder comprises a twin screw configuration comprising a combination of forward and reverse element zones, 2 or more gear mixers, a stabilizer addition port coinciding with a gear mixer, and 2 or more polyol addition ports coinciding with gear mixers. Still more preferably, the extruder comprises a twin screw configuration comprising 5 or more gear mixers, a stabilizer addition port coinciding with one gear mixer, and two polyol addition ports coinciding with later gear mixers.

Sufficient heat is applied to soften or melt the maleic anhydride grafted olefin (co)polymer and thermoplastic resin (if used) being dispersed. Melting or softening the maleic anhydride grafted olefin (co)polymer and thermoplastic resin (if used) facilitates its dispersion into the polyol. The processing temperature ($T_p$) is typically above the polymer's glass transition temperature ($T_g$) and crystalline melt temperature ($T_m$) for crystalline polymers. Desirably, sufficient heat forms a molten polymer from maleic anhydride grafted olefin (co)polymer and thermoplastic resin (if used). Many suitable sources of heat are available including steam, infrared radiation, sonicators, heating mantles, electric heating elements, and friction.

Sufficient shear is also applied when dispersing the maleic anhydride grafted olefin (co)polymer and thermoplastic resin (if used) into a polyol. The maleic anhydride grafted olefin (co)polymer and thermoplastic resin (if used) has a particle size larger than desired in a stable dispersion of the present invention when first contacting a polyol. Sufficient shear breaks the maleic anhydride grafted olefin (co)polymer and thermoplastic resin (if used) into particles having a volume-average particle size desired for a stable dispersion. That is, sufficient shear reduces the particle size of the maleic anhydride grafted olefin (co)polymer and thermoplastic resin (if used) that is in contact with a polyol. Sufficient shear also disperses a desired maleic anhydride grafted olefin (co)polymer and thermoplastic resin (if used) into a desired polyol at a given temperature. What constitutes sufficient shear depends on the maleic anhydride grafted olefin (co)polymer and thermoplastic resin (if used) and polyol in the initial dispersion, as well as the temperature of the polymer(s) and polyol when applying shear. A skilled artisan can readily determine what constitutes sufficient shear for a given combination of maleic anhydride grafted olefin (co)polymer, thermoplastic resin (if used), polyol, and temperature.

The initial dispersion is cooled, while under shear, to a temperature sufficiently low to form a stable dispersion. Cooling an initial dispersion to a temperature below the $T_p$ of the polymers dispersed therein is generally sufficient. Preferably, the initial dispersion is cooled to ambient temperature (typically defined as 23°C). Many means of cooling are suitable. The initial dispersion often can sufficiently cool just by removing the heating source and allowing it to approach ambient temperature. A chilled fluid, such as water, applied to the outside of the mixer can accelerate cooling. One skilled in the art can identify methods for cooling that are most appropriate for their specific mixer configuration.

The process of the present invention involves breaking preformed polymer into a desired particle size while dispersing it in a polyol. This process is in contrast to a process that requires finely dividing a polymer solid prior to dispersing into a polyol, such as disclosed in USP 4,014,846. Breaking a polymer into a desired particle size while dispersing in a polyol saves processing steps while manufacturing polymer in polyol dispersions.

Desirably, the polyol dispersion of the present invention has a volume-average particle size (mean (d50)) of dispersed polymer(s) that is equal to or less than 50 microns, more preferably equal to or less than 20 microns, more preferably equal to or less than 12 microns, more preferably equal to or less than 6 microns, more preferably equal to or less than 3 microns, more preferably equal to or less than 2 microns, and most preferably equal to or less than 1 microns. Typically the polyol dispersion of the present invention has a volume-average particle size of dispersed polymer(s) equal to or greater than 0.01 micron, more preferably equal to or greater than 0.05 micron, more preferably equal to or greater than 0.1 micron, more preferably equal to or greater than 0.5 micron, and most preferably equal to or greater than 0.75 micron. Particle size determination can be accomplished using standard light scattering techniques.

The present invention therefore also provides, in a further embodiment, a polyol dispersion as described above, wherein the polymer particle mixture comprised in the polyol dispersion has a mean particle diameter in the range from 0.01 to 50.0 micrometer.

The total solids content of the polyol dispersions according to the invention can vary within a wide range. The polyol dispersions of the invention have, for example, a total solids content of from 5 to 65 percent by weight, advantageously from 5 to 40 percent by weight.

The particle diameters and their distribution can be determined by means of dynamic light scattering and Fraunhofer diffraction. Alternatively, particle diameters and their distribution may be determined by optical microscopy using a calibrated glass microscope slide.

For the purposes of the present invention, the solids content of the polyol dispersions is the percentage ratio of the polymer particle mixture to the polyol used. The solids content can, for example, be determined gravimetrically from the percentage ratio of the mass of solids to the total mass of the polyol dispersion.

The present invention therefore also provides, in a further embodiment, a polyol dispersion as described above, wherein the polyol dispersion has a solids content of from 5 to 65 percent by weight.

The polyol dispersions of the invention or the polyol dispersions obtainable by a process according to the invention are suitable, in particular, for the production of polyurethanes and thermoplastic polyurethanes. The present invention therefore also provides for the use of a polyol dispersion as described above or a polyol dispersion obtainable by a process as described above for producing polyurethanes and thermoplastic polyurethanes.

The polyol dispersions of the present invention may advantageously be used in polyurethanes, including flexible foams, rigid foams, elastomers, and coatings, especially for coating, adhesive, sealant, and elastomer (CASE) applications, including applied elastomer coatings and liquid cast elastomers, reactive extrusion applications, and in thermoplastic elastomers (TPE), such as thermoplastic polyurethanes (TPU) or thermoplastic copolyesters (COPE). Preferred adhesive applications include hot melt PU adhesives, solvent born PU adhesives, one component (1K) PU adhesives (moisture cured), and two component (2K) PU adhesives, for example see WO 99/10401 and US Patent Application No. 2009/0159205.

Processes and starting materials for the production of polyurethanes and thermoplastic polyurethanes, are known in principle to those skilled in the art. For polyurethanes, it is usual to react at least one polyol component and at least one polyisocyanate. The present invention therefore also provides a process for producing a polyurethane, wherein at least one polyol dispersion as described above or a polyol dispersion obtainable by one of the processes as described above is reacted with at least one polyisocyanate.

According to the invention, the production of the polyurethanes is effected, in particular, by reaction of organic and/or modified organic polyisocyanates with the above-described polyol dispersions of the invention and, if appropriate, further compounds having hydrogen atoms which are reactive toward isocyanates in the presence of catalysts, if appropriate, further auxiliaries and additives, for example chain extenders, cross-linkers, catalysts, flame retardants, stabilizers, lubricants, fillers, dyes, pigments, hydrolysis inhibitors, fungistatic and bacteriostatic substances, and in the case of polyurethane foams, water and/or other blowing agents.

According to the invention, the polyol dispersion of the invention or the polyol dispersion obtainable by a process according to the invention can be used either alone or together with at least one further polyol or together with at least one graft polyol or together with at least one further polyol and at least one graft polyol.

As regards the further starting components which can be used in addition to the polyol dispersions of the invention, the following details may be provided:

As polyisocyanates, it is in principle possible, according to the invention, to use all polyisocyanates known to those skilled in the art, in particular aliphatic, cycloaliphatic, araliphatic and preferably aromatic polyfunctional isocyanates. Examples of suitable polyisocyanates are: alkylene diisocyanates having from 4 to 12 carbon atoms in the alkylene radical, e.g. dodecane 1,12-diisocyanate, 2-ethyl-tetramethylene 1,4-diisocyanate, 2-methylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and also any mixtures of these isomers, 1-isocyanato-3,3,5-trimethyl-5-isocyanato-methylcyclohexane (IPDI), hexahydrotoluene 2,4- and 2,6-diisocyanate and also the corresponding isomer mixtures, dicyclohexylmethane 4,4'-, 2,2'- and 2,4'-diisocyanate and also the corresponding isomer mixtures, and preferably aromatic diisocyanates and polyisocyanates such as 1,5-napthalene diisocyanate, toluene 2,4- and 2,6-diisocyanate and the corresponding isomer mixtures, diphenylmethane 4,4'-, 2,4'- and 2,2'-diisocyanate and the corresponding isomer mixtures, mixtures of diphenylmethane 4,4'- and 2,2'-diisocyanates, polyphenylpolymethylene polyisocyanates, mixtures of diphenylmethane 4,4'-, 2,4'- and 2,2'-diisocyanates and polyphenylpolymethylene polyisocyanates (crude MDI) and mixtures of crude MDI and toluene diisocyanates.

The organic diisocyanates and polyisocyanates can be used individually or in the form of their mixtures.

Preference is given to using toluene diisocyanate, mixtures of diphenylmethane diisocyanate isomers, mixtures of diphenylmethane diisocyanate and crude MDI or toluene diisocyanate with diphenylmethane diisocyanate and/or crude MDI. Particular preference is given to using mixtures of diphenylmethane diisocyanate isomers having proportions of diphenylmethane 2,4'-diisocyanate or 4,4'-diisocyanate of at least 30 percent by weight.

Use is frequently also made of modified polyfunctional isocyanates, i.e. products which are obtained by chemical reaction of organic diisocyanates and/or polyisocyanates. Examples which may be mentioned are diisocyanates and/or polyisocyanates comprising ester, urea, biuret, allophanate, carbodiimide, isocyanurate, uretdione and/or urethane groups. Specific examples are: organic, preferably aromatic, polyisocyanates comprising urethane groups and having NCO contents of from 43 to 15 percent by weight, preferably from 31 to 21 percent by weight, based on the total weight, diphenylmethane 4,4'-diisocyanate modified by reaction with, for example, low molecular weight diols, triols, dialkylene glycols, trialkylene glycols or polyoxyalkylene glycols having mean molecular weights of from 3000 to 6000 g/mol for foam applications and from 500 to 4000 g/mol for CASE applications, modified diphenylmethane 4,4'-diisocyanate, modified diphenylmethane 4,4'- and 2,4'-diisocyanate mixtures or modified crude MDI or toluene 2,4- or 2,6-diisocyanate. The dialkylene glycols or polyoxyalkylene glycols can be used individually or as mixtures; examples are: diethylene glycol, dipropylene glycol, 1,4 butanediol, 1,3 propanediol, polyoxyethylene, polyoxypropylene and polyoxypropylene-polyoxyethene glycols, triols and/or tetrols. Also suitable are prepolymers which comprise NCO groups and have NCO contents of from 1 to 25 percent by weight, preferably from 4 to 20 percent by weight, based on the total weight, and are prepared from polyester polyols and/or preferably polyether polyols and diphenylmethane 4,4'-diisocyanate, mixtures of diphenylmethane 2,4'- and 4,4'-diisocyanate, toluene 2,4- and/or 2,6-diisocyanates or crude MDI. Further suitable polyisocyanates are liquid polyisocyanates comprising carbodiimide groups and/or isocyanurate rings and having NCO contents of from 43 to 15 percent by weight, preferably from 31 to 21 percent by weight, based on the total weight, e.g. ones based on diphenylmethane 4,4'-, 2,4'- and/or 2,2'-diisocyanate and/or toluene 2,4- and/or 2,6-diisocyanate. The modified polyisocyanates can, according to the invention, also be mixed with one another or with unmodified organic polyisocyanates such as diphenylmethane 2,4'-, 4,4'-diisocyanate, crude MDI, toluene 2,4- and/or 2,6-diisocyanate. Particularly useful modified organic polyisocyanates are prepolymers which comprise NCO groups and are advantageously formed by reaction of the isocyanates with polyols and, if appropriate, further compounds having functional groups which are reactive toward isocyanates.

It is frequently desirable, but not essential; to include a catalyst in the reaction mixture employed to make a polyurethane from the polyol dispersion of the present invention. Catalysts used for producing the polyurethanes are, in particular, compounds which strongly accelerate the reaction of the reactive hydrogen atoms, in particular hydroxyl-comprising compounds, with the organic, if appropriate modified polyisocyanates. Possible catalysts are organic metal compounds, preferably organic tin compounds such as the tin(II) salts of organic carboxylic acids, e.g. tin(II) acetate, tin(II) octoate, tin(II) ethylhexanoate and tin(II) laurate, and the dialkyltin(IV) salts of organic carboxylic acids.

Suitable compounds of this type are, for example, dibutyltin diacetate, dibutyltin dilaurate, dibutyltin maleate and dioctyltin diacetate. The organic metal compounds are used either alone or preferably in combination with strongly basic amines. Examples which may be mentioned are amidines such as 2,3-dimethyl-3,4,5,6-tetrahydropyrimidine, tertiary amines such as triethylamine, tributylamine, dimethylbenzylamine, N-methylmorpholine, N-ethylmorpholine, N-cyclohexyl-morpholine, N,N,N',N'-tetramethylethylenediamine, N,N,N',N'-tetramethylbutane-diamine, N,N,N',N'-tetramethylhexane-1,6-diamine, pentamethyldiethylenetriamine, bis(dimethylaminoethyl)ether, bis(dimethylaminopropyl)urea, dimethylpiperazine, 1,2-dimethylimidazole, 1-azabicyclo[3.3.0]octane and preferably 1,4-diazabicyclo-[2.2.2]octane, and aminoalkanol compounds such as triethanolamine, triisopropanolamine, N-methyldiethanolamine and N-ethyldiethanolamine and dimethylethanolamine.

Further possible catalysts are: tris(dialkylaminoalkyl)-s-hexahydrotriazines, in particular tris(N,N-dimethylaminopropyl)-s-hexahydrotriazine, tetraalkylammonium hydroxides such as tetramethylammonium hydroxide, alkali metal hydroxides such as sodium hydroxide, and alkali metal alkoxides such as sodium methoxide and potassium isopropoxide, and also alkali metal salts of long-chain fatty acids having from 10 to 20 carbon atoms and, if appropriate, lateral OH groups.

Preference is given to using from 0.0001 to 5 percent by weight, in particular from 0.001 to 1 percent by weight, of catalyst or catalyst combination, based on the weight of the formative components.

The polyol dispersions of the present invention may advantageously be used in TPUs. TPU elastomers may be prepared in bulk. In the one-shot method, all of the components are mixed together sequentially or all at once and polymerization is allowed to proceed. In the two-step prepolymer or "quasi- prepolymer" technique, all or some of the polyol is pre-reacted with the isocyanate. The prepolymer is then reacted with the remaining polyol and chain extender to form the polymer. The reacting polymer mass may be cast into sheets, oven cured to finish the polymerization, the optionally chopped into pellets for use.

Alternatively, the polymer may be formed by reactive extrusion, in which the ingredients are fed to an extruder capable of intensive mixing. After polymerization in the extruder, the polymer extrudate is cooled and chopped directly and then packaged.

TPU elastomers are described as segmented block copolymers, comprised of hard- and soft-segment blocks. The soft- segment blocks of the TPUs of the present invention are formed from the polyol dispersion disclosed herein above. These are connected through urethane linkages to the hard- segments, composed of the urethane blocks formed from the reaction of short-chain diols, such as 1,4- butane diol, 1,3- propane diol, ethylene glycol, diethylene glycol, 1,3- and 1,4-cyclohexanedimethanolor mixtures thereof with a diisocyanate.

The most common polyester diols are formed from the esterification of adipic or azelaic acids with a slight excess of ethylene glycol, 1,4- butanediol, 1,6- hexanediol, 1,3- and 1,4-cyclohexanedimethanol or mixtures thereof. Diols having molecular weights from 500 to 3,000 g/mol are preferred, diols having molecular weights of from 1,000 and 2,000 g/mol are more preferred. Low acid numbers for the products are essential for ensuring optimum hydrolytic stability.

A class of polyester diol of increasing importance is the polycaprolactones. These are formed from the ring-opening polymerization of E-caprolactone with a starter diol such as diethylene glycol or 1,2 -butane diol, 1,4- butanediol, 1,6- hexanediol, 1,3- and 1,4-cyclohexanedimethanol or mixtures thereof. They yield polyurethanes with properties similar to the poly (butylene adipate) diol polyurethanes, except for somewhat improved hydrolytic stability. Still- better hydrolysis resistance can be achieved with the polycarbonate diol from 1,6- hexane diol and phosgene.

1,4-butane diol is commonly employed as the hard-segment chain extender. Ethylene glycol has had limited use, because of its relative volatility and because the resultant urethane can undergo intramolecular decomposition at TPU-processing temperatures. In applications where improved temperature performance and compression set are required, bis-beta-hydroxyethylhydroquinone has been used as a chain extender.

Any of the diisocyanates previously employed in the polyurethane preparation may be employed. Diisocyanatodiphenylmethane (MDI) is the isocyanate of choice for TPU. Commercial MDI contains about 98% of the 4,4'-isomer with the 2,4'- isomer constituting the bulk of the remainder.

It is frequently desirable, but not essential, to include a catalyst in the reaction mixture employed to prepare TPU compositions of the present invention. Any catalysts conveniently employed in the art, such as any of the catalysts previously employed in the polyurethane preparation herein above, to catalyze the reaction of an isocyanate with a reactive hydrogen containing compound can be employed.

For applications requiring good color retention and stability to UV light, 4, 4'-dicyclohexylmethane diisocyanate ($H_{12}$ MDI) is predominantly used. The other isocyanates are isophorone diisocyanate (IPDI), and 1,3- and 1,4-bisisocyanatomethylcyclohrexane. Antioxidants and UV stabilizers are required for long-term- exposure applications.

A wax may also be added to the TPU composition to aid in mold release and a diatomaceous silica for added slip and as an anti-blocking agents in films. Antioxidants, such as hindered phenols, and UV stabilizers of the benzotriazole type are used for improved environmental resistance.

As a result of the disperse phase, i.e., the solids in the polyol dispersion, chemical, physical, and rheological properties, specifically tensile, solvent resistance, and thermomechanical properties, of the thermoplastic polyurethane is improved compared to thermoplastic elastomers which are produced without the addition of the polyol dispersions of the invention.

The following examples further illustrate, without limiting, the present invention.

## EXAMPLES

The following materials are used in the Examples 1 to 31:

"Polyol-1" is a glycerin initiated propylene oxide and 17.4 percent ethylene oxide capped polyol having a hydroxyl number of 34, an equivalent weight of 1650, and a mol percent primary hydroxyl groups of greater than 50 percent available as VORANOL™ 4703 from The Dow Chemical Company;

"Polyol-2" is a glycerin initiated propylene oxide and 17.6 percent ethylene oxide capped polyol having a hydroxyl number of 35, an equivalent weight of 1580, and a mol percent primary hydroxyl groups of greater than 50 percent, and available as VORANOL™ 4735 from The Dow Chemical Company;

"Polyol-3" is a propylene glycol initiated propylene oxide and 28.5 percent ethylene oxide capped polyol having a hydroxyl number of 61, an equivalent weight of 925, and a mol percent primary hydroxyl groups of greater than 50 percent;

"Polyol-4" is a propylene glycol initiated propylene oxide polyol having a hydroxyl number of 56, an equivalent weight of 1002, and a mol percent primary hydroxyl groups of less than 10 percent available as VORANOL 220-056 from The Dow Chemical Company;

"Polyol-5" is a polytetramethylene ether glycol polyol having a hydroxyl number of 112, an equivalent weight of 500 available as TERETHANE™ 1000 from Sigma-Aldrich, and a mol percent primary hydroxyl groups of greater than 50 percent;

"MA-g-PO-1" is a 1 weight percent maleic anhydride grafted low density polyethylene (LDPE), the LDPE is available as AMPLIFY™ GR202 from The Dow Chemical Company and has a melt flow rate (MFR) of 8 grams per 10 minutes (g/10 min) under the conditions of 190°C and 2.16 kg (ASTM D 1238 used for all MFR measurements unless otherwise specified) and a density of 0.93 grams per cubic centimeter ($g/cm^3$);

"MA-g-PO-2" is a 1 weight percent maleic anhydride grafted substantially linear ethylene-octene metallocene catalyzed copolymer having a 177°C Brookfield viscosity of 15,000 cP and a density of 0.86 $g/cm^3$ prior to maleic anhydride grafting;

"MA-g-PO-3" is a 1 weight percent maleic anhydride grafted substantially linear ethylene-octene metallocene catalyzed copolymer having a 177°C Brookfield viscosity of 13,000 cP and a density of 0.86 $g/cm^3$ prior to maleic anhydride grafting;

"MA-g-PO-4" is a 1 weight percent maleic anhydride grafted very low density polyethylene (VLDPE), the VLDPE is available as AMPLIFY™ GR209 from The Dow Chemical Company and has a MFR of 2 g/10 min under the conditions of 190°C and 2.16 kg and a density of 0.8985 $g/cm^3$,

"MA-g-PO-5" is a 1 weight percent maleic anhydride grafted LDPE, the LDPE is available as AMPLIFY GR216 from The Dow Chemical Company and has a MFR of 1.25 g/10 min under the conditions of 190°C and 2.16 kg and a density of 0.87 $g/cm^3$;

"MA-g-PO-6" is a 1.2 weight percent maleic anhydride grafted polypropylene homopolymer (PP) the polypropylene homopolymer is available as POLYBOND™ 3000 from Chemtura and has a MFR of 400 g/10 min under the conditions of 190°C and 2.16 kg and a density of 0.91 $g/cm^3$;

"NRH-g-PO" is an amine functionalized polyolefin resin produced from reactive extrusion of maleic anhydride grafted ENGAGE™ 8407 (available from The Dow Chemical Company) with 2 to 4 weight percent aminoethylpiperazine and has a MFR of 5 to 10 g/10 min under the conditions of 190°C and 2.16 kg;

"OH-g-PO-1" is a hydroxyl functionalized polyolefin resin produced from reactive extrusion of maleic anhydride grafted ENGAGE™ 8407 (available from The Dow Chemical Company) with 1 to 2 weight percent monoethanolamine and has a MFR of 5 to 10 g/10 min under the conditions of 190°C and 2.16 kg;

"OH-g-PO-2" is a hydroxyl functionalized polyolefin resin produced from reactive extrusion of maleic anhydride grafted INFUSE™ D9807 (available from The Dow Chemical Company) with 1 to 2 weight percent monoethanolamine and has a MFR of 3 to 8 g/10 min under the conditions of 190°C and 2.16 kg;

"Polyanhydride" is a solid linear copolymer of 1-octadecene and maleic anhydride in a 1:1 molar ratio having a molecular weight of from 20,000 to 25,000 and a melting point of 115C to 135C available as PA-18 LV from Chevron Phillips;

"EAA-1" is an ethylene and acrylic acid copolymer comprising 20.5 percent acrylic acid having a MFR of 300 under conditions of 190°C, 2.16 kg available as PRIMACOR™ 5980i from The Dow Chemical Company;

"EAA-2" is an ethylene and acrylic acid copolymer comprising 9.7 percent acrylic acid having a MFR of 11 under conditions of 190°C and 2.16 kg available as PRIMACOR 3440 from The Dow Chemical Company; and

"EAA-3" is a ethylene and acrylic acid copolymer comprising 5 percent acrylic acid available as 426717 from Sigma Aldrich.

The following properties/analysis are determined/preformed on the Examples 1 to 39:

"d50" is the volume-average particle size distribution measured in isopropanol via a light scattering technique using a Beckman Coulter LS 13 320 (polystyrene model), particle size is reported in microns;

"Ts" and "Tb" are tensile strength and tensile break, respectively and are determined on an INSTRON™ 4201 using ASTM D638 with Type 5 sample geometry with a 2 inches per minute ("/min) extension rate, reported values represent the average of 5 sample bars;

"Shore A" is hardness determined according to ASTM D2240;

"Compression Set" is determined according to ASTM D395 B using the conditions of 25 percent deformation (defined as the sample height under compression divided by the sample height prior to compression) and a 24 hr period of deformation at 70°C;

"Creep Resistance" is measured on a RHEOMETRIC SCIENTIFIC™ RSA3 solids analyzer at 150°C with 10 g constant stress on a 0.25 inch by 0.5 inch by 0.06 inch (height by width by thickness) sample, the measurement is allowed to proceed for 24 hr or until the gap increase exceeded 30 percent;

"Optical Microscopy" is performed on a 0.2ml sample of a dispersion dissolved in 4ml ethanol using a LEICA POLYVAR 2 light microscope operating with transmitted light and crossed polarizers. A ¼ lamda filter is used to enhance the contrast.

"Storage Modulus" is determined by dynamic mechanical spectroscopy (DMS) and is measured on a RHEOMETRIC SCIENTIFIC ARES II rheometer using a 1 inch by 0.5 inch by 0.06 inch (height by width by thickness) sample, a strain sweep is performed from 0.1 to 2 percent at 0.178 hertz (Hz) to identify the strain-independent region for the sample and this strain (typically 1 percent) is used to measure the temperature-dependent dynamic mechanical response at a temperature ramp rate of 2°C/min; and

"Solvent Resistance" is measured by gravimetric analysis of samples submerged in the indicated solvent (acetone, ethanol (EtOH), tetrahydrofuran (THF), and dichloromethane (DCM)) for 4 hours, samples are cut from compression molded material utilized for tensile measurements and have initial weights of about 150 milligrams (mg), the sample is dried of surface liquid prior to the measurement of weight gain, solvent resistant values are reported as weight percent increase in the sample weight after 4 hours.

## Example 1

A polyol dispersion comprising a maleic anhydride grafted polyolefin is prepared by a batch manner. A stainless, steel, open-topped, cylindrical vessel (20.3 cm high, 6.5 cm ID) is fitted with an agitator (4.5 cm diameter Cowles blade), a heating mantle, a thermocouple, and a continuous nitrogen gas purge over the top. The vessel is placed on a lab jack so that the depth of the agitator in the vessel could be adjusted by adjusting the elevation of the vessel.

Polyol-3 (160 g, dried overnight in vacuum oven at 60°C), is added to the vessel under 400 rotations per minute (RPM) agitation. The vessel is heated to 170°C. MA-g-PO-3 (40 g in cm-sized pieces, dried overnight in vacuum oven at 150°C) is added to the vessel over 30 minutes. Once the polyolefin is added, the homogeneous liquid is agitated at about 1000 RPM for 30 minutes at 170°C, after which, the heating mantle is turned off and the dispersion is allowed to cool to 60°C under the same agitation, forming a coarse dispersion.

The dispersion is examined by optical microscopy and light scattering to determine the particle size. Optical microscopy reveals a bimodal distribution: elongated particles about 100 microns ($\mu$m) wide by a few hundred microns long, and a large population of spherical particles under 20 $\mu$m in size. The volume-average particle size distribution of a sample of this material is measured in isopropanol via a light scattering technique (Beckman Coulter LS 13 320, polystyrene model) revealing a broad distribution with a d50 of 300 $\mu$m.

## Example 2

A polyol dispersion comprising a maleic anhydride grafted polyolefin is prepared by a batch manner. A stainless, steel, open-topped, cylindrical vessel (20.3 cm high, 6.5 cm ID) is fitted with an agitator (4.5 cm diameter Cowles blade), a heating mantle, a thermocouple, and a continuous nitrogen gas purge over the top. The vessel is placed on a lab jack so that the depth of the agitator in the vessel could be adjusted by adjusting the elevation of the vessel.

Polyol-1 (188.17 g, dried overnight in vacuum oven at 60°C), is added to the vessel under 500 RPM agitation. The vessel is heated to 130°C. MA-g-PO-1 (56.00 g in cm-sized pieces, dried overnight in vacuum oven at 150°C) and Polyanhydride (11.2g, direct from a 1 lb container) are added to the vessel. The nominal composition by mass in the beaker is 16.8 g polyol: 1 g Polyanhydride: 5 g MA-g-PO-1. The clear polyol quickly becomes milky. The pieces of MA-g-PO-1 float on the top of the milky liquid. The temperature of the vessel is increased to 170°C over 20 minutes. After 20 minutes at 170°C, the liquid phase becomes thicker, the pieces of MA-g-PO-1 disappear, and the stirrer is increased to 2000 RPM. Once all the MA-g-PO-1 pieces disappear, the vessel is removed from the heat source and the viscoelastic, gel-like, thick dispersion is poured into a glass jar to cool.

The cooled, gel-like dispersion (24.43 g) is mechanically blended with additional diluent Polyol-1 (42.09 g) using a hand-held rotorstator (Pro250™ Homogenizer), yielding a pourable, stable dispersion (stable for at least 24 hours). Optical microscopy of a sample revealed small, rounded particles generally about 20 $\mu$m in size. The volume-average particle size distribution, d50, is 14.5 $\mu$m.

## Example 3

A polyol dispersion comprising a maleic anhydride grafted polyolefin is prepared by a batch manner. A Haake blender (60 g bowl size) is preheated to 170°C. The bowl is charged with Polyol-1 (29.4 g liquid, dried overnight in vacuum oven at 60°C), Polyanhydride (1.77g, direct from 1 lb container), and MA-g-PO-1 (31.43 g, in cm-sized pieces, dried overnight in vacuum oven at 150°C); nominal mass ratios of the mix were 16.6 g Polyol-1: 1 g Polyanhydride: 17.8g MA-g-PO-1. Once all materials have been added, the speed of the kneading elements is increased to 200 RPM and the components are blended for 37 minutes. A white gel-like dispersion of polyolefin in a thickened continuous phase is recovered from the bowl. Optical microscopy of the gel diluted in additional polyether polyol (5 weight percent olefin) revealed particles with sizes ranging from 25$\mu$m to 200$\mu$m.

## Example 4

A 6L stainless steel batch reactor under nitrogen padding, is charged with 4.720 kg Polyol-2 and 0.280 kg Polyanhydride. The reactor is heated to 140°C while stirring and kept at 140°C for an additional 2 hours. The reactor is cooled to 60°C and reaction mixture is discharged from the reactor.

## Example 5

A polyol dispersion comprising a maleic anhydride grafted polyolefin is prepared by a continuous manner. A Cooperion ZSK-25 (twin screw co-rotatory extruder) is preheated to 170°C. The extruder is equipped with two liquid feeders (A and B) and one solid feeder. The solid feeder is connected to the melt zone. Liquid feeder A is connected to the dispersion zone and liquid feeder B is connected to the dilution zone. Liquid feeder A is filled with Example 4. Liquid feeder B is not used. The solid feeder is filled with MA-g-PO-2. The feed rate for the solids is set at 2.5 kg/hr. The feed rate of liquid feeder A is set at 2.5 kg/hr (total feed rate 5 kg/hr). The extruder residence time is about 3 minutes, sampling starts after 6 minutes.

## Example 6

Post-extruder dilution of Example 5. 100g of Example 5 is diluted with 200g Polyol-2 and high shear mixing is applied (ULTRA-TURRAX™ by IKA) for 5 minutes. This results in a stable olefin dispersion in polyol (17.5 percent solids). Optical microscopy and Coulter counter shows particles sizes in the range of 5 $\mu$m to 15$\mu$m.

## Example 7

A polyol dispersion comprising a maleic anhydride grafted polyolefin is prepared by a continuous manner. A Cooperion ZSK-25 (twin screw co-rotatory extruder) is preheated to 170°C. The extruder is equipped with two liquid feeders (A and B) and one solid feeder. The solid feeder is connected to the melt zone. Liquid feeder A is connected to the dispersion zone and liquid feeder B is connected to the dilution zone. Liquid feeder A is filled with Example 4. Liquid feeder B is filled with Example 6. The solid feeder is filled with MA-g-PO-2. The feed rate for the solids is set at 1.2kg/hr. The feed rate of liquid feeder A is set at 2.8 kg/hr. The feed rate of liquid feeder B is set at 12 kg/hr (total feed rate 16 kg/hr). The residence time in the extruder is about 3 minutes and sampling starts after 6 minutes. The extrudate is a stable dispersion (stable for at least 72 hours) containing 8.48 percent of solids. Optical microscopy and Coulter counter analysis of the dispersion shows spherical particles with particle sizes in the range of 10 $\mu$m to 20$\mu$m.

## Examples 8 to 11

Polyol dispersions comprising a maleic anhydride grafted polyolefin are prepared by a batch manner. Examples 8 to 11 are prepared in a Haake mixer (60 g bowl size) which is preheated to 170°C. Compositions of Examples 8 to 11 are presented in Table 1. Polyol-1 is added to the bowl, followed by Polyanhydride (if present), then cm-sized pieces of MAg-PO-1 and/or EAA-1 which is dried overnight under vacuum at 150°C. The agitator speed was set to 200 RPM and the materials are heated and blended for 60 minutes. The resulting gel-like dispersions are collected and examined by optical microscopy. In each case, a dispersion is formed with particles from 5 to hundreds of microns in size (judged by eye under the microscope). An optical micrograph of Example 11, diluted with Polyol-1 and mixed with a Pro250™

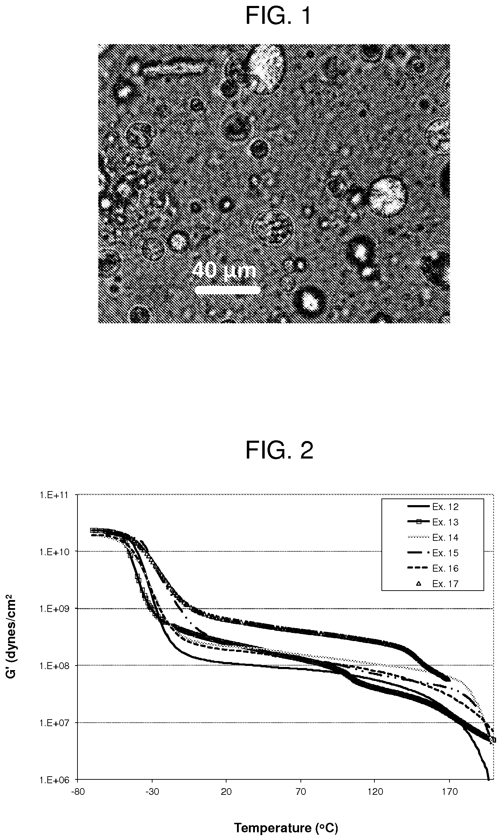

Homogenizer to yield a dispersion comprising 2.5 percent EAA-1 and 2.5 percent MA-g-PO-1 via) is shown in **FIG. 1.**

Table 1

| Example | Polyol-1, g | Polyanhydride, g | EAA-1, g | MA-g-PO-1, g |
|---|---|---|---|---|
| 8 | 28.32 | 1.68 | 30 | 0 |
| 9 | 28.32 | 1.68 | 15 | 15 |
| 10 | 30 | 0 | 30 | 0 |
| 11 | 30 | 0 | 15 | 15 |

**Examples 12 to 21**

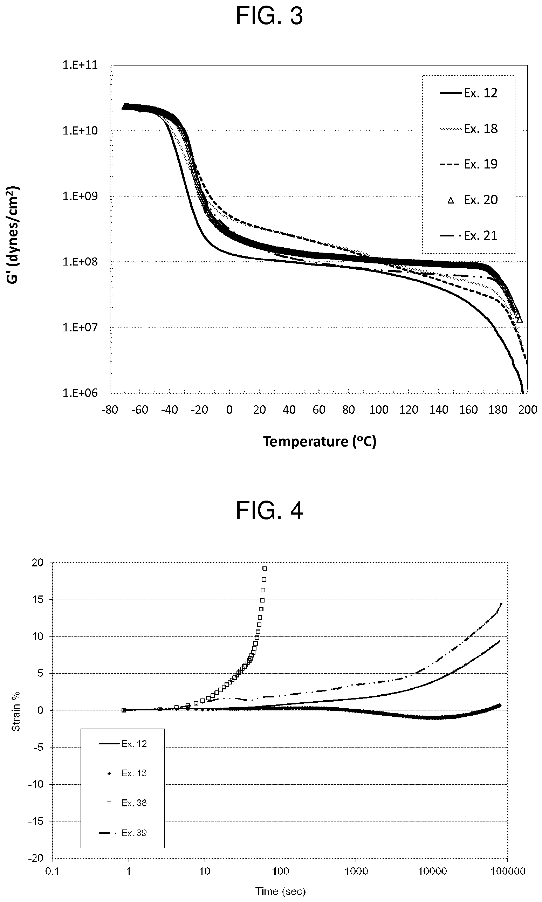

Polyurethane elastomers made in a one-step batch process comprising a polyol dispersion of the invention. Examples 12 to 21 are prepared using a total of 20 or 22 weight percent polyolefin in the polyol dispersion (as MA-g-PO or a mixture of MA-g-PO and optionally EAA). The polyol dispersion is first prepared in a Haake mixer by adding ca. 7.9 g (all masses specified are for 22 weight percent dispersion) of $1\times1\times1$ cm pieces of MA-g-PO or optionally a mixture of MA-g-PO with EAA (dried overnight in vacuum oven at 150°C ) followed by 28.1 g Polyol-3 (dried overnight in vacuum oven at 60°C) and allowed to reactively disperse for 3 to 5 min at 170°C. The polyolefin copolymer polyol dispersion is then reacted with 40 weight percent 4,4'-methylene diphenyl diisocyanate (MDI)/ 1,4-butanediol (BDO) (18.9 g MDI, 5.1 g BDO) in the presence of tin(II) 2-ethylhexanoate catalyst (0.2 weight percent) for 5 min at 190°C to 200°C to form TPU elastomers (isocyanate index of 1.05). The resulting TPU is removed from the Haake mixer and compression molded (20,000 lbs, 190 to 210°C) into plaques for property evaluation. Polyol dispersion compositions and TPU tensile properties are summarized in Table 2. Storage modulus from dynamic mechanical analysis for Examples 12 to 21 are shown in **FIG. 2** and **FIG. 3**. Solvent resistance performance for Examples 12 to 16 are summarized in Table 4. Creep performance for Examples 12 and 13 is shown in **FIG. 4**

Table 2

| Example | Polyol | MA-g-PO, wt % | EAA, wt % | Tb, % | Ts, psi |
|---|---|---|---|---|---|
| 12* | Polyol-3 | | | 1315 | 2443 |
| 13 | Polyol-3 | MA-g-PO-1, 22 | | 1210 | 4880 |
| 14 | Polyol-3 | MA-g-PO-2, 20 | | 1130 | 3090 |
| 15 | Polyol-3 | MA-g-PO- 4, 22 | | 1204 | 5631 |
| 16 | Polyol-3 | MA-g-PO-5, 22 | | 1233 | 4660 |
| 17 | Polyol-3 | MA-g-PO-6, 22 | | 1287 | 6238 |
| 18 | Polyol-3 | MA-g-PO-1, 16 | EAA-2, 4 | 710 | 2400 |
| 19 | Polyol-3 | MA-g-PO-1, 10 | EAA-2, 10 | 1010 | 2520 |
| 20 | Polyol-3 | MA-g-PO-2, 16 | EAA-3, 4 | 1600 | 3220 |
| 21 | Polyol-3 | MA-g-PO-2, 10 | EAA-3, 10 | 1500 | 5010 |
| *not an example of the present invention | | | | | |

**Examples 22 to 25**

Polyurethane elastomers (TPUs) are made in a one-step batch process comprising either a polyol dispersion of the invention (Examples 22 and 23) of a polyol with no dispersed polyolefin (Examples 24 and 25). Examples 24 and 25 are not examples of the invention. TPUs of Examples 22 to 25 are prepared using a total of 14 or 23 weight percent polyolefin. For Examples 22 and 23, the polyol dispersion is prepared in a Haake mixer (170°C, 3-5 min) then reacted with 36 and 34 weight percent, respectively, 4,4'-methylene diphenyl diisocyanate (MDI)/ 1,4-butanediol (BDO) to form TPU elastomers in the presence of tin(II) 2-ethylhexanoate catalyst (0.2 weight percent) for 5 min at 190 to 200°C (isocyanate index of 1.05). For Examples 24 and 25, the polyol is reacted with 40 weight percent 4,4'-methylene diphenyl diisocyanate (MDI)/ 1,4-butanediol (BDO) in a Haake mixer to form TPU elastomers (isocyanate index of 1.05). The resulting TPUs made from polyols alone (Examples 24 and 25) are then melt blended with MA-g-PO-2 in an extruder at 190°C for 5 min to obtain TPUs with hard segment compositions of 36 and 34 weight percent (MA-g-PO-2 is assumed to contribute to soft segment composition).

Compositions and TPU hardness, tensile properties, and compression set performance are summarized in Table 3. Solvent resistance performance for Examples 20 to 25 is described in Table 4.

Table 3

| Example | Polyol | MA-g-PO, wt % | Shore A | Tb, % | Ts, psi | Compression Set, % |
|---------|--------|---------------|---------|-------|---------|--------------------|
| 22 | Polyol-3 | MA-g-PO-2, 14 | 79 | 1653 | 4080 | 55 |
| 23 | Polyol-3 | MA-g-PO-2, 23 | 75 | 1758 | 4745 | 52 |
| 24* | Polyol-3 | MA-g-PO-2, 14 | 82 | 1262 | 1517 | 64 |
| 25* | Polyol-3 | MA-g-PO-2, 23 | 75 | 1094 | 1354 | 68 |
| *not an example of the present invention | | | | | | |

Table 4

| Example | EtOH | THF | DCM | Acetone |
|---------|------|-----|-----|---------|
| 12 | 81 | 448 | 294 | 89 |
| 13 | 22 | 122 | 54 | 28 |
| 14 | 36 | 216 | 142 | 47 |
| 15 | 31 | 204 | 82 | 42 |
| 16 | 28 | 170 | 40 | 25 |
| 20 | 38 | 280 | 189 | 52 |
| 21 | 37 | 419 | 188 | 56 |
| 22 | 87 | 51 | 1000 | 266 |
| 23 | 71 | 50 | 634 | 240 |
| 24* | 74 | 55 | 1000 | 285 |
| 25* | 81 | 50 | 1000 | 292 |
| 1000% indicates sample dissolution or breakup into pieces following solvent immersion | | | | |

## Example 26

To a 6L stainless steel batch reactor under nitrogen padding, is charged 4450 kg Polyol-2 and 550 kg Polyanhydride. The reactor is heated to 140°C while stirring and kept at 140°C for an additional 2 hours. The reactor is cooled to 60°C and reaction mixture is discharged from the reactor.

## Example 27

Polyol dispersions made by a continuous process. A Cooperion ZSK-25 twin screw co-rotatory extruder is preheated to 170°C. The extruder is equipped with one liquid and one solid feeder. The solid feeder is connected to the melt zone. The liquid feeder is connected to the dispersion zone and is filled with Example 26, the reaction product of 11 weight percent Polyanhydride and Polyol-3. The solid feeder is filled with MA-g-PO-2. The feed rate for the solids (i.e., MA-g-PO-2) is set at 1.6 kg/hr. The feed rate for the liquid feeder is set at 2.4 kg/hr. Sampling starts after 6 minutes (2 residence times) resulting in a dispersion concentrate with 46.7 weight percent solids. The resulting dispersion concentrate is subsequently diluted with additional Polyol-3 at 100°C to a final solids level of 18 weight percent using a stainless, steel, open-topped, cylindrical vessel (20.3 cm high, 6.5 cm ID) fitted with an agitator (4.5 cm diameter Cowles blade), a heating mantle, a thermocouple, and a continuous nitrogen gas purge over the top. The vessel is placed on a lab jack so that the depth of the agitator in the vessel could be adjusted by adjusting the elevation of the vessel. The mean particle size of the resulting dispersion is 6.7 $\mu$m (d10=2.94, d50=5.25, and d90=10.55 $\mu$m) and the viscosity was 6,500 cP (23°C, Brookfield #31).

**Examples 28 to 31**

Examples 28 and 29 are TPUs of the invention prepared in a batch process using the polyol dispersion of Example 27. Examples 30 and 31 are TPUs made with Polyol-3 and are not examples of the present inventions. The polyol dispersion and polyol are reacted with 30 or 35 weight percent 4,4'-methylene diphenyl diisocyanate (MDI) and 1,4-butanediol (BDO) in the presence of tin(II) 2-ethylhexanoate catalyst (0.2 weight percent) for 5 min at 190-200°C (isocyanate index of 1.05-1.10) in a Haake mixer (5 min at 190-200°C). TPU composition and properties, tensile, hardness, and compression set are summarized in Table 5.

Table 5

| Example | MDI/BDO, % | Shore A | Tb, % | Ts, psi | Compression Set, % |
|---------|-----------|---------|-------|---------|--------------------|
| 28 | 30 | 75 | 1383 | 1514 | 65 |
| 29 | 35 | 81 | 1630 | 3014 | 53 |
| 30 | 30 | 66 | 1916 | 1099 | |
| 31 | 35 | 78 | 2152 | 2731 | |

**Example 32**

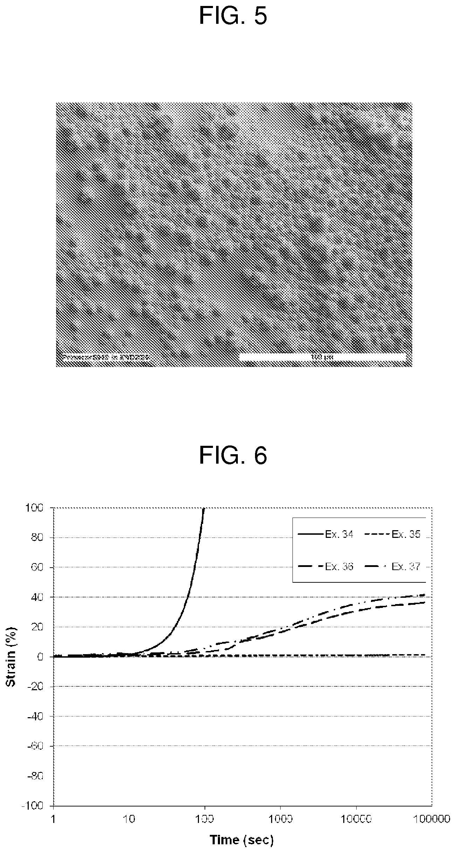

Example 32 is a polyol dispersion made by a continuous process. A Cooperion ZSK-25 twin screw co-rotatory extruder is preheated to 170°C. The extruder is equipped with one liquid and one solid feeder. The solid feeder is connected to the melt zone. The liquid feeder is connected to the dispersion zone and is filled with Polyol-3. The solid feeder is filled with 4 to 1 (weight basis) MA-g-PO-3 to EAA-1. The feed rate for the solids is set at 2.5 kg/hr. The feed rate for the liquid feeder is set at 2.5 kg/hr. Sampling starts after 6 minutes (2 residence times) resulting in a dispersion concentrate with 50 weight percent solids. The resulting dispersion concentrate is subsequently cooled, pelletized, and fed into the solid feeder of the extruder which is connected to the melt zone. The liquid feeder is again connected to the dispersion zone and is filled with Polyol-3. The feed rate for the solids is set at 2.0 kg/hr. The feed rate for the liquid feeder is set at 0.5 to 0.75 kg/hr. Sampling starts after 6 minutes (2 residence times) resulting in a dispersion concentrate with 23 to 25 weight percent solids. The mean particle size of the resulting dispersion is 12.7 $\mu$m (mode of 4.9 $\mu$m) and the viscosity is 2,240 cP (25°C, cone/plate rheometer), SR 100 s$^{-1}$. An optical micrograph of Example 32 is shown in **FIG. 5.**

**Example 33**

Example 33 is a polyol dispersion made by a continuous process. A Cooperion ZSK-25 twin screw co-rotatory extruder is preheated to 100°C. The extruder is equipped with two liquid feeders and one solid feeder. The solid feeder is connected to the melt zone. Both liquid feeders are connected to the dispersion zone and are filled with Polyol-3. The solid feeder is filled with MA-g-PO-3. The feed rate for the solids is set at 2.0 kg/hr with a total feed rate of 10 kg/hr. Feed rates of liquid feeder A and B range between 1 to 7 kg/hr. Sampling starts after 6 minutes (2 residence times) and the obtained material is rapidly cooled while stirring in a Cowles mixer. The mean particle size of the resulting dispersion is 377 $\mu$m (mode of 116 $\mu$m) and the viscosity was 3600 cP (25°C, cone/plate rheometer), SR 100 s$^{-1}$.

**Examples 34 to 37**

Examples 34 to 37 are polyurethane elastomers made in a one-step batch process comprising a polyol dispersion of the invention. Examples 34 to 37 are prepared using a total of 22 weight percent functionalized polyolefin in polyol dispersion. MA-g-PO resins are reactively extruded with either monoethanolamine or aminoethylpiperazine to produce immidized products with hydroxyl and secondary amine functionality, respectively. The polyol dispersion is first prepared in a Haake mixer by adding ca. 7.9 g (all masses specified are for 22 weight percent dispersion) of 1 by 1 by 1 cm pieces of MA-g-PO or optionally a mixture of MA-g-PO with EAA (dried overnight in vacuum oven at 150°C ) followed by 28.1 g Polyol-5 (dried overnight in vacuum oven at 60°C) and allowed to reactively disperse for 3-5 min at 170°C. The polyolefin copolymer polyol dispersion is then reacted with 40 weight percent 4,4'-methylene diphenyl diisocyanate (MDI)/ 1,4-butanediol (BDO) (19.8 g MDI, 4.2 g BDO) in the presence of tin(II) 2-ethylhexanoate catalyst (0.2 weight percent) for 5 min at 190-200°C to form TPU elastomers (isocyanate index of 1.05). The resulting TPU is removed from the Haake mixer and compression molded (20,000 lbs, 190-210°C) into plaques for property evaluation. Polyol dispersion compositions and TPU tensile properties for Examples 34 to 37 are summarized in Table 6 and solvent resistance performance in Table 7. Creep performance for Examples 34 to 37 is shown in **FIG. 6** .

Table 6

| Example | Polyol | MA-g-PO, wt % | Tb, % | Ts, psi |
|---|---|---|---|---|
| 34* | Polyol-5 | | 1320 | 3100 |
| 35 | Polyol-5 | NRH-g-PO, 22 | 1150 | 2170 |
| 36 | Polyol-5 | OH-g-PO-1, 22 | 1540 | 5830 |
| 37 | Polyol-5 | OH-g-PO-2, 22 | 1260 | 4700 |
| *not an example of the present invention | | | | |

Table 7

| Example | EtOH | THF | DCM | Acetone |
|---|---|---|---|---|
| 34* | 39 | 1000 | 519 | 90 |
| 35 | 35 | 1000 | 174 | 1000 |
| 36 | 28 | 1000 | 254 | 52 |
| 37 | 32 | 250 | 222 | 52 |
| *not an example of the present invention 1000% indicates sample dissolution or breakup into pieces following solvent immersion | | | | |

## Examples 38 and 39

Examples 38 and 39 are polyurethane elastomers made in a one-step batch process comprising a polyol dispersion not of the invention. Examples 38 and 39 are not an examples of the invention. Example 39 is prepared using a total of 22 weight percent MA-g-PO-1 in the polyol dispersion. The polyol dispersion is first prepared in a Haake mixer by adding 7.9 g (all masses specified are for 22 weight percent dispersion) of 1 by 1 by 1 cm pieces of MA-g-PO (dried overnight in vacuum oven at 150°C ) followed by 28.1 g Polyol-4 (dried overnight in vacuum oven at 60°C) and allowed to reactively disperse for 3-5 min at 170°C. The polyolefin copolymer polyol dispersion is then reacted with 40 weight percent 4,4'-methylene diphenyl diisocyanate (MDI)/ 1,4-butanediol (BDO) (18.8 g MDI, 5.2 g BDO) in the presence of tin(II) 2-ethylhexanoate catalyst (0.2 weight percent) for 5 min at 190 to 200°C to form TPU elastomers (isocyanate index of 1.05). The resulting TPU is removed from the Haake mixer and compression molded (20,000 lbs, 190 to 210°C) into plaques for property evaluation. Polyol dispersion compositions and TPU tensile properties for Examples 38 and 39 are summarized in Table 8 and solvent resistance in Table 9. Creep performance for Examples 38 and 39 is shown in **FIG. 5**.

Table 8

| Example | Polyol | MA-g-PO, wt % | Shore A | Tb, % | Ts, psi |
|---|---|---|---|---|---|
| 38* | Polyol-4 | | 50 | 145 | 46 |
| 39* | Polyol-4 | MA-g-PO-1, 22 | 80 | 302 | 453 |
| *not an example of the present invention | | | | | |

Table 9

| Example | EtOH | THF | DCM | Acetone |
|---|---|---|---|---|
| 38* | 13 | 1000 | 1000 | 1000 |

(continued)

| Example | EtOH | THF | DCM | Acetone |
|---|---|---|---|---|
| 39* | 70 | 41 | 83 | 1000 |

*not an example of the present invention
1000% indicates sample dissolution or breakup into pieces following solvent immersion.

**Claims**

1. A dispersion of

   a maleic anhydride grafted olefin (co)polymer; and
   optionally, a thermoplastic (co)polymer resin,

   in a polyol having a primary hydroxyl content of equal to or greater than 50 percent,
   wherein the dispersion comprises reaction products between any of the maleic anhydride grafted olefin (co)polymer, the polyol and/or optionally the thermoplastic (co)polymer resin,
   wherein the olefin (co)polymer is selected from a homopolymer of polyethylene or polypropylene, a random, block, or graft polyolefin copolymer comprising ethylene and one or more unsaturated monomer selected from a $C_3$ to $C_{12}$ $\alpha$, $\beta$-unsaturated alkene, a substantially linear ethylene polymer, a linear ethylene polymer, an ethylene/alpha-olefin block copolymers, or combinations thereof.

2. The dispersion of Claim 1 wherein the maleic anhydride is grafted onto the olefin (co)polymer in an amount of from 0.01 to 6 weight percent based on the weight of the olefin (co)polymer.

3. The dispersion of Claim 1 wherein the polyol is a polycarbonate polyol, a polyester polyol, a polyalkylene polyol, or a polyether polyol having a terminal unsaturation content between 0.0001 meq/g to 0.06 meq/g.

4. The dispersion of claim 1 comprising one or more thermoplastic (co)polymer resin selected from LLDPE, HDPE, a low-molecular weight polyethylene, an elastomer, a polyolefin elastomer, a polyurethane elastomer, a chlorinated PE resin, a polyolefin wax, an EAA copolymer, a linear copolymer of 1-octadecene and maleic anhydride, an ethylene(meth)acrylate copolymer, an ethylene vinyl acetate copolymer, an ethylene/vinyl alcohol copolymer, a polyvinyl alcohol, SAN, or a polyurethane.

5. A process to make the dispersion of Claim 1 comprising the steps of:

   (i) contacting, in a single mixer,

   (a) the maleic anhydride grafted olefin (co)polymer,
   (b) a polyol having a primary hydroxyl content of equal to or greater than 50 percent, and
   (c) optionally the thermoplastic (co)polymer, under conditions of sufficient heat and sufficient shear to form an initial dispersion of the maleic anhydride grafted olefin (co)polymer in the polyol and

   (ii) while under shear, cooling the initial dispersion sufficiently to form a stable dispersion.

6. The process of Claim 5 is a batch process.

7. The process of Claim 5 wherein the single mixer is an extruder and the process is continuous.

8. A polyurethane (PU), a thermoplastic elastomer (TPE) or a thermoplastic copolyester (COPE) comprising the dispersion of Claim 1.

9. The thermoplastic elastomer of Claim 8 is a thermoplastic polyurethane (TPU).

10. A process for producing the thermoplastic polyurethane of Claim 9 comprising the step of reacting:

(1) the dispersion of Claim 1
With
(2) a prepolymer reaction product of a short chain diol with a diisocyanate.

11. Use of the polyurethane of Claim 8 for a reactive extrusion application, cast application, a liquid cast elastomer, an adhesive, a hot melt adhesive, a solvent born adhesives, a one component (1K) adhesive (moisture cured), a two component (2K) adhesives a sealant, or an applied elastomer coating.

**Patentansprüche**

1. Dispersion von

einem Maleinsäureanhydrid-gepfropften Olefin(co)polymer; und
optional einem thermoplastischen (Co)polymerharz,
in einem Polyol, das einen primären Hydroxylgehalt von gleich oder größer als 50 Prozent aufweist, wobei die Dispersion Reaktionsprodukte zwischen einem beliebigen des Maleinsäureanhydrid-gepfropften Olefin(co)polymers, dem Polyol und/oder optional dem thermoplastischen (Co)polymerharz umfasst, wobei das Olefin(co)polymer ausgewählt ist aus einem Homopolymer von Polyethylen oder Polypropylen, einem Zufall, Block oder einem gepfropften Polyolefincopolymer, umfassend Ethylen und ein oder mehrere ungesättigte Monomere, die aus einem $C_3$ bis $C_{12}$-$\alpha,\beta$-ungesättigten Alken, einem im Wesentlichen linearen Ethylenpolymer, einem linearen Ethylenpolymer, einem Ethylen/Alphaolefin-Blockcopolymer oder Kombinationen davon ausgewählt sind.

2. Dispersion nach Anspruch 1, wobei das Maleinsäureanhydrid auf das Olefin(co)polymer in einer Menge von 0,01 bis 6 Gew.-%, basierend auf dem Gewicht des Olefin(co)polymers, gepfropft ist.

3. Dispersion nach Anspruch 1, wobei das Polyol ein Polycarbonatpolyol, ein Polyesterpolyol, ein Polyalkylenpolyol oder ein Polyetherpolyol ist, das einen terminalen Nichtsättigungsgehalt zwischen 0,0001 meq/g bis 0,06 meq/g aufweist.

4. Dispersion nach Anspruch 1, umfassend ein oder mehrere thermoplastische (Co)polymerharze, ausgewählt aus LLDPE, HDPE, einem Polyethylen mit niedrigem Molekulargewicht, einem Elastomer, einem Polyolefinelastomer, einem Polyurethanelastomer, einem chlorierten PE-Harz, einem Polyolefinwachs, einem EAA-Copolymer, einem linearen Copolymer von 1-Octadecen und Maleinsäureanhydrid, einem Ethylen(meth)acrylatcopolymer, einem Ethylenvinylacetatcopolymer, einem Ethylen/Vinylalkohol-Copolymer, einem Polyvinylalkohol, SAN oder einem Polyurethan.

5. Prozess, um die Dispersion nach Anspruch 1 herzustellen, umfassend die Schritte:

(i) Inkontaktbringen, in einem einzelnen Mischer,

(a) des Maleinsäureanhydrid-gepfropften Olefin(co)polymers,
(b) eines Polyols, das einen primären Hydroxylgehalt von gleich oder größer als 50 Prozent aufweist und
(c) optional des thermoplastischen (Co)polymers unter Bedingungen von ausreichender Wärme und ausreichender Scherung, um eine anfängliche Dispersion des Maleinsäureanhydrid-gepfropften Olefin(co)polymers in dem Polyol auszubilden

und
(ii) während der Scherung, ausreichendes Abkühlen der anfänglichen Dispersion, um eine stabile Dispersion auszubilden.

6. Prozess nach Anspruch 5 ist ein Batch-Prozess.

7. Prozess nach Anspruch 5, wobei der einzelne Mischer ein Extruder ist und der Prozess kontinuierlich ist.

8. Polyurethan (PU), thermoplastisches Elastomer (TPE) oder thermoplastisches Copolyester (COPE), umfassend die Dispersion nach Anspruch 1.

**9.** Thermoplastisches Elastomer nach Anspruch 8 ist ein thermoplastisches Polyurethan (TPU).

**10.** Prozess zum Herstellen des thermoplastischen Polyurethans nach Anspruch 9, umfassend den Schritt des Reagierens:

(1) der Dispersion nach Anspruch 1
mit
(2) einem Präpolymerreaktionsprodukt eines kurzkettigen Diols mit einem Diisocyanat.

**11.** Verwendung des Polyurethans nach Anspruch 8 für eine reaktive Extrusionsanwendung, Gussanwendung, ein Flüssiggusselastomer, einen Klebstoff, ein Heißschmelzklebstoff, ein lösungsmittelbasierte Klebstoffe, ein Ein-Komponenten-Klebstoffe (1K-Klebstoff) (Feuchtigkeit gehärtet), ein Zwei-Komponente-Klebstoffe (2K-Klebstoff), eine Dichtmasse oder eine aufgebrachte Elastomerbeschichtung.

**Revendications**

**1.** Dispersion de

un (co)polymère oléfinique à greffe anhydride maléique ; et
facultativement, une résine de (co)polymère thermoplastique,
dans un polyol ayant une teneur en hydroxyle primaire égale ou supérieure à 50 pour cent, la dispersion comprenant des produits de réaction entre n'importe lesquels parmi le (co)polymère oléfinique à greffe anhydride maléique, le polyol et/ou facultativement la résine de (co)polymère thermoplastique,
dans laquelle le (co)polymère oléfinique est choisi parmi un homopolymère de polyéthylène ou de polypropylène, un copolymère polyoléfinique aléatoire, séquencé ou greffé comprenant de l'éthylène et un ou plusieurs monomères insaturés choisis parmi un alcène à insaturation $\alpha$, $\beta$ en $C_3$ à $C_{12}$, un polymère d'éthylène sensiblement linéaire, un polymère d'éthylène linéaire, un copolymère séquencé d'éthylène/alpha-oléfine, ou des combinaisons de ceux-ci.

**2.** Dispersion selon la revendication 1 dans laquelle l'anhydride maléique est greffé sur le (co)polymère oléfinique en une quantité allant de 0,01 à 6 pour cent en poids en fonction du poids du (co)polymère oléfinique.

**3.** Dispersion selon la revendication 1 dans laquelle le polyol est un polyol de polycarbonate, un polyol de polyester, un polyol de polyalkylène, ou un polyol de polyéther ayant une teneur en insaturations terminales comprise de 0,0001 méq/g à 0,06 méq/g.

**4.** Dispersion selon la revendication 1 comprenant une ou plusieurs résines de (co)polymère thermoplastique choisies parmi PELBD, PEHD, un polyéthylène de faible masse moléculaire, un élastomère, un élastomère polyoléfinique, un élastomère de polyuréthane, une résine de PE chloré, une cire polyoléfinique, un copolymère EAA, un copolymère linéaire de 1-octadécène et d'anhydride maléique, un copolymère d'éthylène-(méth)acrylate, un copolymère d'éthylène-acétate de vinyle, un copolymère d'éthylène/alcool vinylique, un alcool polyvinylique, SAN, ou un polyuréthane.

**5.** Procédé pour fabriquer la dispersion selon la revendication 1 comprenant les étapes consistant à :

(i) mettre en contact, dans un unique mélangeur,

(a) le (co)polymère oléfinique à greffe anhydride maléique,
(b) un polyol ayant une teneur en hydroxyle primaire égale ou supérieure à 50 pour cent, et
(c) facultativement le (co)polymère thermoplastique, dans des conditions de chaleur suffisante et de cisaillement suffisant pour former une dispersion initiale du (co)polymère oléfinique à greffe anhydride maléique dans le polyol

et
(ii) sous cisaillement, refroidir suffisamment la dispersion initiale pour former une dispersion stable.

**6.** Procédé selon la revendication 5 qui est un procédé par lots.

7.  Procédé selon la revendication 5 dans lequel l'unique mélangeur est une extrudeuse et le procédé est continu.

8.  Polyuréthane (PU), élastomère thermoplastique (TPE) ou copolyester thermoplastique (COPE) comprenant la dispersion selon la revendication 1.

9.  Élastomère thermoplastique selon la revendication 8 qui est un polyuréthane thermoplastique (TPU).

10. Procédé permettant de produire le polyuréthane thermoplastique selon la revendication 9 comprenant l'étape de réaction :

    (1) de la dispersion selon la revendication 1
    avec
    (2) un produit de réaction prépolymère d'un diol à chaîne courte avec un diisocyanate.

11. Utilisation du polyuréthane selon la revendication 8 pour une application d'extrusion réactive, une application de coulée, un élastomère coulé liquide, un adhésif, un adhésif thermofusible, un adhésif à base de solvant, un adhésif monocomposant (1K) (durci à l'humidité), un adhésif bicomposant (2K), un produit d'étanchéité, ou un revêtement élastomère appliqué.

## FIG. 1

## FIG. 2

## FIG. 3

## FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6174959 B
- US 4883837 A
- WO 0063293 A
- EP 0837097 A
- US 6632879 B
- US 6512024 B
- US 6613827 B
- US 20100048785 A
- JP S644227 A
- US 5358984 A
- US 3264272 A
- US 5272236 A
- US 5278272 A
- US 3645992 A
- US 4937299 A
- US 4701432 A
- US 4937301 A
- US 4935397 A
- US 5055438 A
- EP 129368 A
- EP 260999 A
- WO 9007526 A
- US 7355089 B
- US 7504347 B
- US 7514517 B
- US 7524911 B
- US 7557147 B
- US 7579408 B
- US 7582716 B
- US 7592397 B
- US 7608668 B
- US 7622179 B
- US 20060199930 A
- US 4798081 A
- US 3427334 A
- US 3941849 A
- US 4477589 A
- US 5158922 A
- US 5470813 A
- US 5482908 A
- US 7348460 B
- US 4014846 A
- WO 9910401 A
- US 20090159205 A

### Non-patent literature cited in the description

- **KIRK OTHMER.** Olefin Polymers. *Encyclopedia of Chemical Technology,* 1967, vol. 14, 217-335
- **WILDE, L. ; RYLE, T.R. ; KNOBELOCH, D.C. ; PEAT, I.R.** Determination of Branching Distributions in Polyethylene and Ethylene Copolymers. *J. Polym. Sci.,* 1982, vol. 20, 441-455